# EUROPEAN PATENT APPLICATION

(11) **EP 2 109 301 A1**
(43) Date of publication of application: **14.10.2009**
(21) Application number: 08154439.7
(22) Date of filing: 11.04.2008
(51) Int. Cl.: H04M 3/42

(54) **Provision of temporary telephone numbers**

(71) Applicant: Freespee AB, 753 81 Uppsala (SE)
(72) Inventor: Holmquist, Carl, 167 73, Bromma (SE); Lindgren, Tobias, 753 08, Uppsala (SE)
(74) Representative: Skagersten, Thomas

(57) **Abstract**

The present invention relates to a method of providing a temporary telephone number. Further, the invention relates to a device and a system for providing a temporary telephone number. To this end, single-use phone numbers are employed to safeguard privacy and integrity of an individual wishing to give her number to a third party. Thus, an application for providing temporary telephone numbers, which typically is embodied in the form of a software application implemented on, or in connection to, appropriate hardware such as a telephone exchange device, receives a request for a temporary telephone number. In response to the request, the application associates a permanent number with a temporary telephone. The application may have access to a pool of temporary numbers, or may alternatively create a new temporary number in real time. Then, either directly if the third party wishes to contact the individual at once, or subsequently if the third party prefers to make contact at a later point in time, a call addressed to the temporary telephone number is redirected to the permanent number with which it is associated. Once the temporary telephone number has been used, it is revoked by the application, thereby making it a single-use number.

## Description

### Technical field of the invention

The present invention relates to a method of providing a temporary telephone number. Further, the invention relates to a device and a system for providing a temporary telephone number.

### Background art

Within the field of communications, whether it is telecommunication or data communication, via telephone, the Internet or other communication means, an individual may wish to provide a third party with a communication address or contact information, such as e.g. email addresses or telephone numbers, via which the third party can contact the individual. However, for reasons of integrity and privacy, since such information easily can be abused, an individual may be reluctant to give such information to a third party. A solution to this problem in the prior art has been to provide individuals with temporary communication addresses.

US-patent application US 2006/0141981 generally discloses a method for obtaining a temporary ID. A request is created for a temporary ID for a first user that has a permanent ID for being contacted through a first mode of communication, for instance by email. The request, which includes at least one usage rule provided by the first user, is sent to an ID generator. The usage rule may e.g. specify number of uses of the temporary ID or expiration time. A temporary ID that allows a second user to contact the first user through the first mode of communication without knowing the permanent ID of the first user is received from the ID generator. The temporary ID is mapped to the permanent ID of the first user and is mapped with the at least one usage rule. When the second user wishes to contact the first user, for instance via e-mail, the second user sends an email to the temporary email address at the ID service provider (e.g. short-lived-ID@ID-service-provider). In response, the ID service provider obtains the corresponding permanent email, and uses this permanent email to forward part or all of the email received from the user to the person associated with the permanent email. Thus, the second user is able to contact the first user via a temporary address, and the first user need only trust the ID provider with his/her permanent address.

A problem in the art is that when an individual wishes to be contacted via telephone, for instance when advertising for a sale on an Internet site, she must state her home phone number or mobile number on the site. Obviously, this phone number may be abused, and once this happens, the individual will certainly want to cancel the number. For email addresses, abuse is not perceived as being as disturbing from a privacy point of view, since the individual may state an email address having a temporary character, for instance a hotmail or a gmail address. However, the process of canceling a phone number is rather tedious, and users are further quite reluctant to give up their "established" phone numbers in exchange for a new phone number.

### Summary

An object of the present invention is to overcome the above mentioned problem in the art.

This object is attained by a method, device and system as set forth in the attached independent claims.

To this end, single-use phone numbers are employed to safeguard privacy and integrity of an individual wishing to give her number to a third party. Thus, an application for providing temporary telephone numbers, which typically is embodied in the form of a software application implemented on, or in connection to, appropriate hardware such as a telephone exchange device, receives a request for a temporary telephone number. In response to the request, the application associates a permanent number with a temporary telephone. The application may have access to a pool of temporary numbers, or may alternatively create a new temporary number in real time. Then, either directly if the third party wishes to contact the individual at once, or subsequently if the third party prefers to make contact at a later point in time, a call addressed to the temporary telephone number is redirected to the permanent number with which it is associated. Once the temporary telephone number has been used, it is revoked by the application, thereby making it a single-use number.

In an alternative embodiment, the individual may herself request one or more temporary telephone numbers at the application. In analogy with the above, the application associates a permanent number with a temporary telephone number in response to the request and returns the one or more temporary numbers to the individual. Once a call is made to any one of the temporary telephone numbers, the caller is redirected to the permanent number with which temporary number is associated, and the temporary number is revoked.

This has the advantage that the privacy and integrity of the individual is safeguarded; for example, when advertising for a sale on an Internet site, or publishing a personal profile on a dating site or some other community, an individual will normally not want to state her telephone number due to risk of abuse. However, to effect a possible business transaction, a potential buyer will typically want to contact a seller for a discussion. This is particularly true if the advertised goods are costly, i.e. if a great deal of money are at stake. In prior art, the seller must state her permanent phone number on the Internet site, whereby the potential buyer can make contact by means of the stated number. With the present invention, the buyer could e.g. mark an icon on the site which reads "acquire temporary phone number to the seller", thereby submitting a request to a provider of temporary number, wherein a temporary number is returned to the Internet site. This number may appear in a pop-up window on the screen. When calling this temporary number, the buyer will be redirected, via the telephone exchange of the provider of the temporary number, to the permanent number of the seller. Once the temporary number has been used, its coupling to the permanent number will be cancelled, thus effectively making it a single-use number. Consequently, the integrity and privacy of the seller is safeguarded. The number is considered to have been used if a successful or unsuccessful call is made to the temporary number.

A further advantage of the present invention is that it creates traffic to the Internet site, which typically is desired by the site provider. The site provider may earn advertising revenue based on the number of site visitors. Thus, in the above given example, each time a potential buyer wishes to make contact with the seller, he must visit the site and generate a temporary number, since it is a single-use number. This is further advantageous for the telephone exchange provider, since each call to the temporary number generates traffic in the telephone network. It should be noted that the term "telephone number" not only includes mobile phone numbers and public switched telephone numbers, but also IP telephone numbers, such as SIP addresses (Session Initiation Protocol). Thus, the temporary phone number may comprise a sequence of digits such as 468-123 456 78, i.e. a regular public switched telephone network (E.164) number. However, it may just as well come in the form of a SIP number, e.g. mike@sip.freespee.net.

Moreover, managing single-use phone numbers is much easier and straightforward than managing temporary or short-lived numbers subordinate to usage rules, such as time of expiry, number of uses, time to live, etc. When using temporary numbers which are not single-use number (e.g. short-lived numbers valid for a given time period), there is still a risk of abuse. Clearly, an individual may be reluctant to provide an unfamiliar party with temporary numbers which may be abused, even though the abuse is temporary due to the character of the numbers.

In an embodiment of the invention, the request is made by a third party wishing to contact an individual as has been described in the above. However, in an alternative embodiment, the individual herself may make a request for one or more temporary numbers, which she can distribute to various third parties who wants to make contact.

Further features of, and advantages with, the present invention will become apparent when studying the appended claims and the following description. Those skilled in the art realize that different features of the present invention can be combined to create embodiments other than those described in the following.

### Brief description of the drawings

A detailed description of preferred embodiments of the present invention will be given in the following with reference made to the accompanying drawings, in which:
Figure 1a shows an exemplifying system in which the present invention may be implemented.
Figure 1b shows another exemplifying system in which the present invention may be implemented.
Figure 1c shows a further exemplifying system in which the present invention may be implemented.
Figure 2 shows a flow chart illustrating an embodiment of the method of the present invention.

### Detailed description of embodiments of the invention

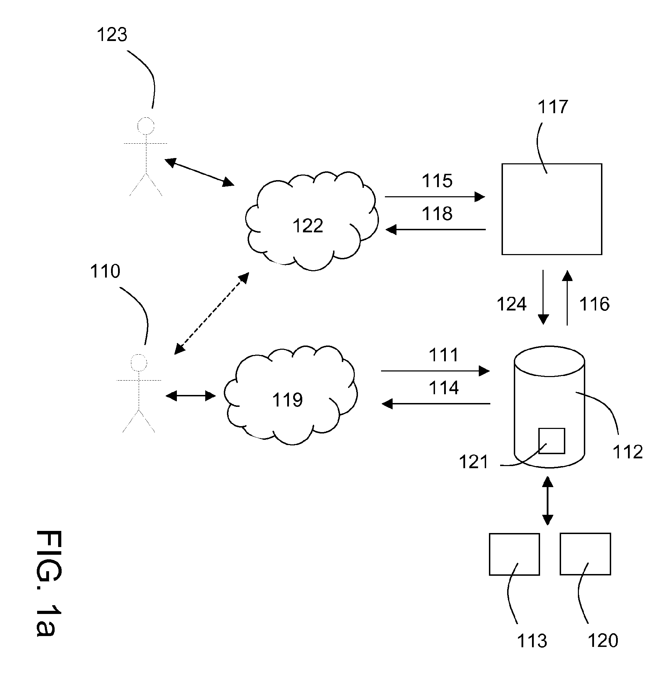

Figure 1a shows an exemplifying system in which the present invention may be implemented. In an embodiment of the invention, a request for a temporary number is made by an individual 110 (via e.g. a site on the Internet 119), which request further comprises the permanent number of the individual and is transmitted 111 to an application server 112. That is, in this particular embodiment, the individual in possession of the permanent number herself requests temporary numbers. The application server stores a pool 113 of temporary numbers from which one or more temporary numbers may be fetched in response to the received request. The application server 112 associates these one or more temporary numbers with the permanent number of the individual and transmits 114 the temporary number(s) to the requester 110. Simultaneously, the temporary number and the permanent number is transmitted 116 to a telephone exchange 117 (or a SIP signaling exchange). As previously mentioned, these temporary numbers (as well as the permanent number via which the individual wishes to be contacted) may comprise PSTN numbers, mobile phone numbers, SIP numbers, etc. These temporary numbers may be provided by the individual 110 to anybody wishing to make contact. When a third party 123 wishes to contact the individual by means of the temporary numbers, a call 115 is made to the temporary telephone number via the public telephone network 122 (or public Internet) to the telephone exchange (or SIP signaling exchange) 117. The telephone exchange (or SIP signaling exchange) holds the association of the temporary number with the permanent number as long as the association is valid. Typically, the telephone exchange 117 (or SIP signaling exchange), redirects 118 the call addressed to the temporary telephone number via the public telephone network 122 (or the Internet) to the permanent number with which it is associated (which is denoted by means of the dashed arrow). Once the telephone exchange (or SIP signaling exchange) has detected a successful or unsuccessful call attempt to the temporary number (for redirection to the permanent number), the temporary number is revoked, thereby making it a single-use number. The telephone exchange 117 (or SIP signaling exchange) transmits 124 the revoked number to the application server 112. The revoked number is placed in a quarantine pool 120, or is returned to the number pool 113.

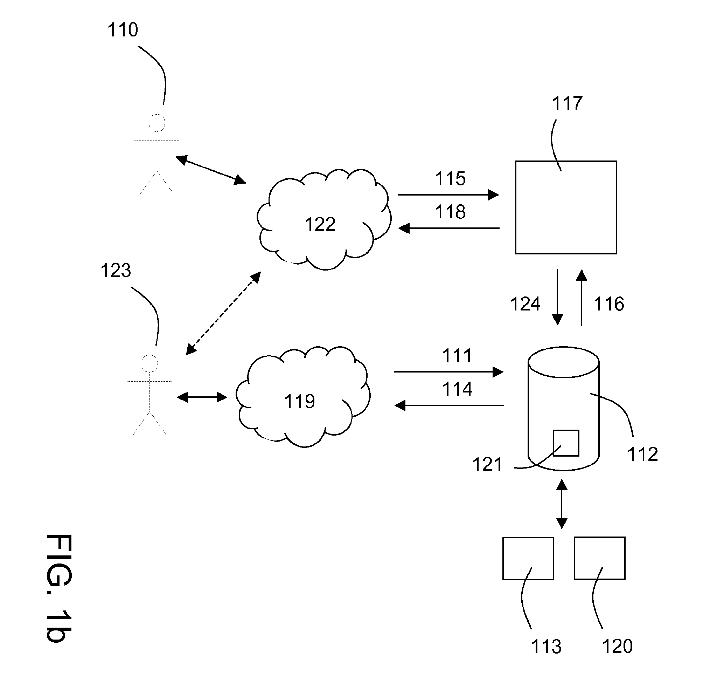

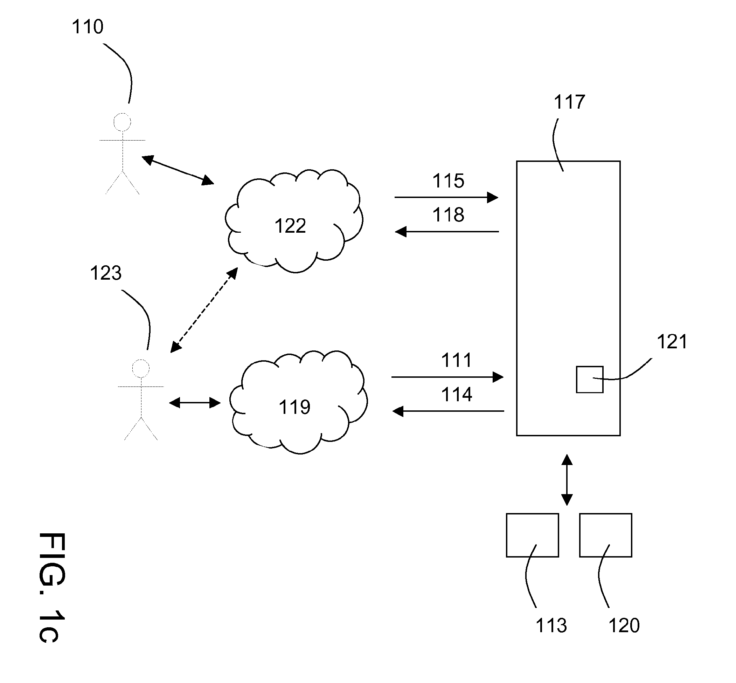

In the system shown throughout Figures 1, it is to be understood that one and the same party operates the application server and the telephone exchange.

The application server 112 typically comprises one or more microprocessors 121 or some other device with computing capabilities, e.g. an application specific integrated circuit (ASIC), a field programmable gate array (FPGA), a complex programmable logic device (CPLD), etc., in order to perform the various steps for providing a temporary phone number and subsequently effecting redirection of a call. When performing steps of different embodiments of the method of the present invention, the microprocessors typically execute appropriate software that is downloaded to the application server and stored in a suitable storage area, such as e.g. a RAM, a Flash memory or a hard disk.

In another embodiment of the invention, which is described with reference to Figure 1b, the requester 123 of a temporary number is not the individual holding the permanent number with which the temporary number is to be associated, but a third party wishing to make contact with the individual 110 in possession of the permanent phone number. For instance, the third party may mark an icon reading "acquire temporary phone number" on an Internet site at which the individual 110 to be contacted has registered her permanent phone number, which marking generates a request. As in the case of the above described embodiment, the request comprises the permanent number of the individual to be contacted and is transmitted 111 to an application server 112. Note that the temporary number is non-visible to the requesting third party. The application server 112 associates a temporary number with the permanent number of the individual and transmits 114 the temporary number to the requester 123. Simultaneously, the associated temporary number and the permanent number are transmitted 116 to the telephone exchange 117 (or SIP signaling exchange). In this particular embodiment, the third party 123 makes a call 115 to the temporary telephone number via the public telephone network 122 (denoted by means of the dashed arrow) to the telephone exchange/SIP signaling exchange 117, which redirects 118 the call made to the temporary number to the permanent number via the public telephone network 122. Again, once the telephone exchange (or SIP signaling exchange) has detected a successful or unsuccessful call attempt to the temporary number for call redirection, the temporary telephone number is revoked, thereby making it a single-use number. The telephone exchange 117 (or SIP signaling exchange) transmits 124 the revoked number to the application server 112. The revoked number is placed in a quarantine pool 120, or is returned to the number pool 113. This effectively safeguards the privacy and integrity of the individual.

A further embodiment of the invention is described with reference to Figure 1c, where a third party 123 requests a temporary number of an individual holding a permanent number with which the temporary number is to be associated, for instance by marking an icon on an Internet site at which the individual to be contacted has registered her permanent phone number. The request comprises the permanent number of the individual 110 to be contacted and is transmitted 111,e.g. via the Internet 119, to a telephone exchange/SIP signaling exchange 117. Again, the temporary number is non-visible to the requesting third party. In this particular embodiment, the functionality of the application server previously described is implemented at the telephone exchange/SIP signaling exchange, typically by means of software running on a microprocessor 121. The exchange associates a temporary number with the permanent number of the individual 110 and transmits 114 the temporary number to the requester 123. The third party 123 makes a call 115 to the temporary telephone number via the public telephone network 122 (or via IP telephony), which is denoted by means of the dashed arrow, to the telephone exchange/SIP exchange 117, which redirects 118 the call to the temporary number to the permanent number via the public telephone network 122. Again, once the telephone exchange (or SIP signaling exchange) has detected a successful or unsuccessful call attempt to the temporary number for call redirection, the temporary telephone number is revoked, thereby making it a single-use number. The revoked number is placed in a quarantine pool 120, or is returned to the number pool 113.

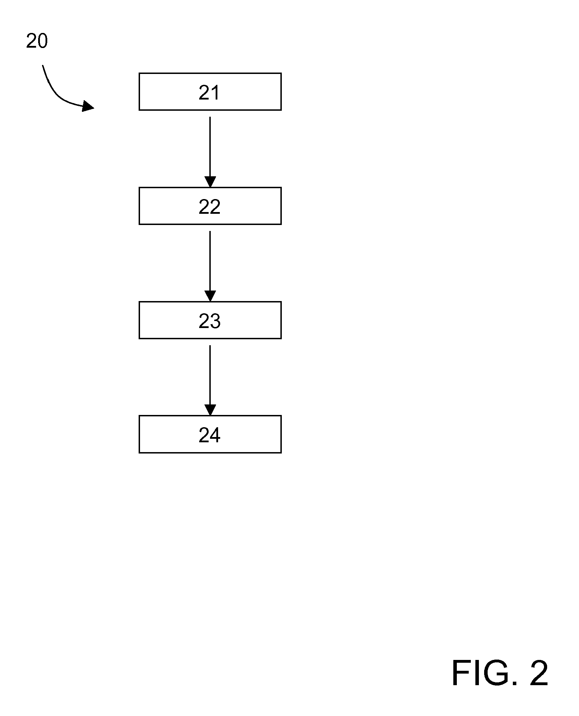

Reference is made to Figure 2 for a flow chart illustrating an embodiment of the method of the present invention. Similar to the system described in connection to Figure 1, a request for a temporary telephone number is received in step 21 at an application server. In step 22, the application server (or the exchange in case the server and exchange is implemented in the same entity) associates a permanent number with a temporary telephone number created in response to the request and transmits the temporary telephone number to the requester. In the same step the temporary number and the permanent number is transmitted to the telephone exchange (or SIP signaling exchange). In step 23, the requester makes a call using the temporary number, which call is directed to the permanent number with which the temporary telephone number is associated. Finally, in step 24, the telephone exchange (or SIP signaling exchange) and the application server revokes the temporary telephone number, thereby making it a single-use number.

Even though the invention has been described with reference to specific exemplifying embodiments thereof, many different alterations, modifications and the like will become apparent for those skilled in the art. The described embodiments are therefore not intended to limit the scope of the invention, as defined by the appended claims. It is to be noted that other types of telephone numbers exist than the types explicitly mentioned herein. Any type of destination address encompassed by the term "telephone number" can be used in the present invention and is thus covered by the scope of the attached claims.

## Claims

1. A method (20) of providing a temporary telephone number, said method comprising the steps of:
receiving (21) a request for a temporary telephone number;
associating (22) a permanent number with a temporary telephone number created in response to said request and transmitting the temporary telephone number to the requester;
directing (23) a call addressed to the temporary telephone number to the permanent number with which it is associated;
revoking (24) the temporary telephone number once it has been used, thereby making it a single-use number.

2. The method of claim 1, wherein the request is received from a third party wishing to make contact with an individual in possession of the permanent phone number.

3. The method of claim 1, wherein the request is received from the individual in possession of the permanent phone number.

4. The method of any one of claims 1 and 2, wherein the request is received from an Internet site, and the method further comprises the step of:
transmitting the temporary telephone number to the Internet site for a requesting site visitor to use.

5. The method of any one of the preceding claims, wherein the temporary telephone number is a SIP address.

6. The method of any one of the preceding claims, wherein the temporary telephone number is a PSTN telephone number (E.164).

7. The method of any one of the preceding claims, wherein the temporary telephone number is a mobile telephone number.

8. A device (117) for providing a temporary telephone number, said device comprising means (121) being arranged to:
receive a request for a temporary telephone number;
associate a permanent number with a temporary telephone number created in response to said request and transmit the temporary telephone number to the requester;
direct a call addressed to the temporary telephone number to the permanent number with which it is associated;
revoke the temporary telephone number once it has been used, thereby making it a single-use number.

9. The device (117) of claim 8, wherein the request is received from a third party wishing to make contact with an individual in possession of the permanent phone number.

10. The device (117) of claim 8, wherein the request is received from the individual in possession of the permanent phone number.

11. The device (117) of any one of claims 8 and 9, wherein the request is received from an Internet site, and said means (121) further is arranged to:
transmit the temporary telephone number to the Internet site.

12. The device (117) of any one of claims 8-11, said device being a telephone exchange.

13. The device (117) of any one of claims 8-11, said device being a SIP signaling exchange.

14. A system for providing a temporary telephone number, said system comprising an application server (112) and exchange means (117), said application server being arranged to
receive a request for a temporary telephone number;
associate a permanent number with a temporary telephone number created in response to said request and transmit the temporary telephone number to the requester;
transmit the association of numbers to the exchange means;
revoke the temporary telephone number once it has been used, thereby making it a single-use number; and wherein the exchange means is arranged to
direct a call addressed to the temporary telephone number to the permanent number with which it is associated.

15. A computer program product comprising computer-executable components for causing a device (112, 117) to perform the steps recited in any one of claims 1-7 when the computer-executable components are run on a processing unit (121) included in the device.
